(19) 

Europäisches
Patentamt
European
Patent Office
Office européen
des brevets

(11) **EP 4 550 642 A1**

(12) **EUROPEAN PATENT APPLICATION**

(43) Date of publication:
**07.05.2025  Bulletin 2025/19**

(21) Application number: **23207702.4**

(22) Date of filing: **03.11.2023**

(51) International Patent Classification (IPC):
***H02M 1/00*** (2006.01)        ***H02M 1/14*** (2006.01)
***H02M 3/158*** (2006.01)

(52) Cooperative Patent Classification (CPC):
**H02M 3/158; H02M 1/007; H02M 1/14;**
**H02M 3/1584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **Koivula, Ville**
  **00380 Helsinki (FI)**

• **Jaukkari, Klaus**
  **00380 Helsinki (FI)**
• **Peltonen, Lauri**
  **00380 Helsinki (FI)**
• **Salmia, Teemu**
  **00380 Helsinki (FI)**
• **Vilkki, Markus**
  **00380 Helsinki (FI)**
• **Rapinoja, Hanna**
  **00380 Helsinki (FI)**

(74) Representative: **Kolster Oy Ab**
**Salmisaarenaukio 1**
**P.O. Box 204**
**00181 Helsinki (FI)**

(54) **CONTROL METHOD FOR CONTROLLING CURRENT RIPPLE OF DC-DC CONVERTER AND AN ELECTRIC SYSTEM**

(57)    An electric system comprises a DC-link (2), an energy storage (12), and a DC-DC converter (10) coupled between the DC-link and the energy storage. The DC-link has an adjustable DC-link voltage $U_{DC}$ and the energy storage has a DC energy storage voltage $U_{ES}$.

A current ripple control (110) is provided to dynamically adjust the DC-link voltage $U_{DC}$ so that a voltage ratio $U_{ES}/U_{DC}$ is controlled to an optimal value or value range that causes a desired current ripple level at the energy storage.

Fig. 11

EP 4 550 642 A1

**Description**

FIELD OF THE INVENTION

The present invention relates to DC-DC converters, and more particularly to DC-DC converters coupled between an electric energy storage and a DC-link.

BACKGROUND OF THE INVENTION

Electrical energy storage (EES) has become more and more important for electric systems, such as electric grids, electric and hybrid vehicles, electric motor drives, uninterrupted power sources, etc. Depending on applications, either a short-term or long-term energy storage or both may be needed. Generally, short-term storage is ensured via classic storage systems, such as batteries and supercapacitors, for example for guaranteeing the stability of the electric grid in case of load and production fluctuation or for storing braking energy in motor drives and electric traction vehicles (regenerative braking). The energy storage may provide a storage buffer when there is more supply than the demand (or a vehicle is braking) and discharge the stored energy during peak demand periods (or a vehicle is accelerating). By comparison, a long-term energy storage may be a battery or a fuel cell, or an electrolyser producing hydrogen via hydrogen electrolysis (EL). This produced hydrogen can then be stored in tanks under various forms. Fuel cells can then use stored hydrogen from tanks in order to provide electric power to the electric system.

DC-DC converters, also called DC choppers, are generally used in electric systems as an interface between an electrical energy storage and a DC intermediate circuit of the rest of the electric system so that the energy storage can be either discharged or charged with the desired electric power. The DC intermediate circuit is also called a DC-link or DC bus. If an electrical energy storage was used directly in power converter DC-link, only a part of total available energy could be used. In that case the minimum voltage level of an energy source is defined by a grid voltage. With the help of a DC-DC converter, an energy storage does not have to operate at the same voltage level as the DC-link, but the energy storage is provided with exactly the desired voltage level. When connecting an energy storage to a DC-link through a DC-DC converter, the nominal voltage of the energy storage is typically lower than DC-link voltage. Therefore, for discharging energy into the DC-link, the voltage needs to be stepped up (boost operation), and for charging energy from the DC-link, the voltage needs to be stepped down (buck operation). Such converters may be necessary not only to step-down or step-up a voltage but also for voltage conditioning as the hydrogen electrolyser and fuel cell voltages may have a non-linear behaviour.

Electric energy storage requires clean DC current, and it sets high requirements for DC-DC converter performance. The greater is the ripple of current of the energy storage, the greater is the power loss and heat generated in the energy storage, which leads to either an increased need for cooling or a decreased lifetime of the energy storage. Electromagnetic interference caused by current ripple must also be considered when designing the system and verifying interferencefree operation. Unfortunately, there is always a high-frequency current ripple associated with the power switches used in power converters coupled to the DC-link. The frequency of this current ripple is the same as a switching frequency gating the power switches, which is usually 10 kHz or higher. Further, a low frequency current ripple (twice the AC frequency, e.g., 2x50 Hz), or six times the AC frequency in 3-phase systems) may be present due to an AC-DC and/or DC-AC conversion in the electric system. There are however methods to minimize the current ripple. Typically, lower DC current ripple has been reached with stronger passive filtering, i.e., by increasing the inductance in an output filter of DC-DC converter or adding filter capacitance in the output filter. The downsides are that high power filters can become bulky and expensive, additionally it will introduce extra losses that decrease the efficiency of the overall power system. On the one hand, the inductance requirement may be reduced by increasing the switching frequency of the converter. However, with the increasing switching frequency, the power switch switching losses are much higher and also the inductor core losses may increase depending on the core material and the frequency range, decreasing drastically the energy efficiency. Further, more expensive semiconductors with higher current rate are needed. The lower conduction losses will compensate the increased switching losses. Alternatively, it is possible to use semiconductor components with lower switching loss, such as silicon carbide semiconductors, but this usually results in poorer EMC performance, for example. Another approach is an active ripple reduction method. An example of this is a multi-phase DC-DC converter, also called an interleaved converter. While a DC current does not have a phase, the current ripple does. With multiple evenly spaced ripple phases the current ripple can be decreased to 1/N, where N is the number of phases. The number of phases that is feasible to implement is limited, as more phases mean more complexity and more switching losses.

There need for further reducing the current ripple of the energy storage without having to add losses, price or size to the system.

BRIEF DESCRIPTION OF THE INVENTION

An object of the present invention is to further reduce or minimize a current ripple at an electric energy storage. The object is achieved by a method and an electric system recited in the independent claims. The preferred embodiments of the invention are disclosed in the dependent claims.

An aspect of the invention is a method of controlling a current ripple caused by a DC-DC convert-er coupled between a DC-link and an energy storage, the DC-link having a DC-link voltage UDC and the energy storage having a DC energy storage voltage UES, the method comprising dynamically adjusting the DC-link voltage UDC to control a ratio UES/UDC to an optimal value or value range that causes a desired current ripple level at the energy storage.

In an embodiment, the dynamically adjusting comprises

determining a voltage or voltage range of the energy storage voltage UES,
determining the optimal value or value range of the DC-link voltage UDC that gives the optimal value or value range of the ratio UES/UDC for the determined voltage or voltage range of the energy storage voltage UES, and
adjusting the DC-link voltage UDC to the optimal value or value range to obtain the desired current ripple level for the determined voltage or voltage range of the energy storage voltage UES.

In an embodiment, the desired current ripple is equal to or less than a predetermined target ripple or within a predetermined current ripple range, preferably a zero or close to zero.

In an embodiment, the determining comprises selecting the highest possible optimal value or value range of the DC-link voltage UDC, if there is a plurality of possible optimal values or value ranges of the DC-link voltage UDC, to enable transferring as much electric power as possible.

In an embodiment, the method comprises discharging the DC-link before changing from one optimal value or value range of the DC-link voltage UDC to another.

In an embodiment, the DC-DC converter is an interleaved multi-phase DC-DC converter, and wherein the method comprises dynamically adjusting the DC-link voltage UDC to control the ratio UES/UDC to a value or value range that corresponds to one of zero points of current ripple.

In an embodiment, the DC-DC converter is an interleaved three-phase DC-DC converter, and where-in the method comprises adjusting the DC-link voltage to control the ratio UES/UDC to a value or value range that is about or close to one of 1/3, 2/3, and 1.

In an embodiment, the DC-DC converter is an interleaved six-phase DC-DC converter, and wherein the method comprises adjusting the DC-link voltage to control the ratio UES/UDC to a value or value range that is about or close to one of 1/6, 1/3, 1/2, 2/3, 5/6, 1.

In an embodiment, the DC-DC converter is an interleaved multi-phase DC-DC converter, preferably and wherein the method comprises selectively switching off one or more phases of a multi-phase interleaved DC-DC converter to obtain a zero point of the current ripple at a desired point of the energy storage voltage range, preferably so that a phase shift between the remaining phases is 180 degrees or 90 degrees and there is a zero point of the current ripple at a midpoint of the energy storage voltage range.

In an embodiment, the DC-DC converter is a single-phase DC-DC converter, and the method comprises

setting a limit value for the current ripple level of the energy storage, determining a present current ripple level, adjusting the DC-link voltage UDC primarily to a first predetermined value, and
adjusting the level of the DC-link voltage UDC from a first predetermined value to a second predetermined value, if the present current ripple level was to exceed the limit value, wherein the second predetermined value is smaller than the first predetermined value, the second predetermined value controlling the ratio UES/UDC to a value or value range that limits the present current ripple level to the set limit value or less.

In an embodiment, the energy storage comprises one or more of a rechargeable energy storage, a hydrogen electrolyser, and a fuel cell.

In an embodiment, the DC-DC converter is bidirectional.

Another aspect of the invention is an electric system, comprising

a DC-link, the DC-link having a DC-link voltage UDC,
an energy storage, the energy storage having a DC energy storage voltage UES,
a DC-DC converter is coupled between the DC-link and the energy storage,
adjustment means for adjusting the DC-link voltage UDC, and
control means configured to control the electric system to carry out the method according to any one of claims 1-12.

In an embodiment, the electric system comprises at least one further converter coupled to the DC-link coupled to a power source or a load, wherein the at least one further converter comprises one or more of an AC-DC converter connected to an AC power source or an AC load, a DC-AC converter connected to an AC power source or an AC load, and a further DC-DC converter connected to a DC power source or a DC load, wherein the AC power source preferably comprises one or more of an AC power grid and a wind power plant, wherein the DC power source preferably comprises one or more of a battery, a fuel cell, and a solar power plant, wherein the load preferably comprises an AC motor or a DC motor.

In an embodiment, the adjustment means comprise an adjustable voltage source, preferably the DC-DC converter or the at least one further converter.

In an embodiment, the control means comprise a separate controller unit, a controller of the DC-DC converter or the at least one further converter, or a higher-level controller in the electric system, or any combination thereof.

BRIEF DESCRIPTION OF THE DRAWINGS

In the following the invention will be described in greater detail by means of exemplary embodiments with reference to the attached drawings, in which

Figures 1A, 1B, 1C and 1D show exemplary electrical systems where a current ripple control according to embodiments of the invention may be applied;

Figure 2 shows an exemplary single-phase bidirectional DC-DC converter;

Figure 3 shows an example of a multi-phase interleaved DC-DC converter;

Figure 4 shows an example of a peak-to-peak current ripple versus a duty cycle for a single-phase DC-DC converter;

Figure 5 shows examples of the energy storage current $I_{ES}$ and the phase currents $I_{p1}$, $I_{p2}$, and $I_{p3}$ for a 3-phase interleaved DC-DC converter;

Figure 6 shows a relative change in the peak-to-peak phase current ripple $I_{p2p}$ when increasing the number of phases N from a single phase to three phases, and further to six phases;

Figure 7 shows an example of a peak-to-peak current ripple for a 3-phase interleaved DC-DC converter;

Figure 8 shows an example of a behaviour of the peak-to-peak current ripple in function of the DC-link voltage $U_{DC}$, when the energy storage voltage $U_{ES}$ is fixed;

Figure 9 shows a behaviour of the peak-to-peak current ripple in function of the energy storage voltage $U_{ES}$ in an exemplary embodiment of a current ripple control of a 3-phase interleaved DC-DC converter;

Figure 10 shows a flow diagram illustrating an exemplary current ripple control procedure according to an embodiment;

Figure 11 shows an exemplary current ripple control arrangement according to an embodiment;

Figure 12 shows a behaviour of the peak-to-peak current ripple and the optimized DC-link voltage in function of the energy storage voltage $U_{ES}$ in another exemplary embodiment of a current ripple control of a 3-phase interleaved DC-DC converter; and

Figure 13 shows a behaviour of the peak-to-peak current ripple and the optimized DC-link voltage in function of the energy storage voltage $U_{ES}$ in an exemplary embodiment of a current ripple control of a single-phase DC-DC converter.

DETAILED DESCRIPTION OF EXEMPLARY EMBODIMENTS

The present invention can be applied to any DC-DC converters, also called DC choppers, where it is desired to control (e.g., optimize or minimize) a current ripple at output of the DC-DC converter that is connected to a DC-link.

The term "DC-link", also called "a DC bus" or "an intermediate circuit" refers to the junction or connection provided between two conversion stages and effectively acting as an adaptive intermediate level. As known, a DC-link may be formed of a pair of conducting rails, cables or similar structures that are used for connecting devices. A so-called DC-link capacitor (that may comprise one or more capacitors) is connected in parallel between the positive and the negative rails to smooth a voltage and current ripple and to form a steady energy and power supply for the inverter. Moreover, energy can also be temporarily stored in the DC-link, where it remains available on demand. It should be noted that the implementation of a DC-link is not relevant to the present invention and embodiments of the invention are intended to be limited to any specific implementations of a DC-link.

The present invention is particularly applicable to DC-DC converters that are used in electrical systems between an energy storage and a DC-link of the rest of the electrical system so that the energy storage can be either discharged or charged with the desired electric power.

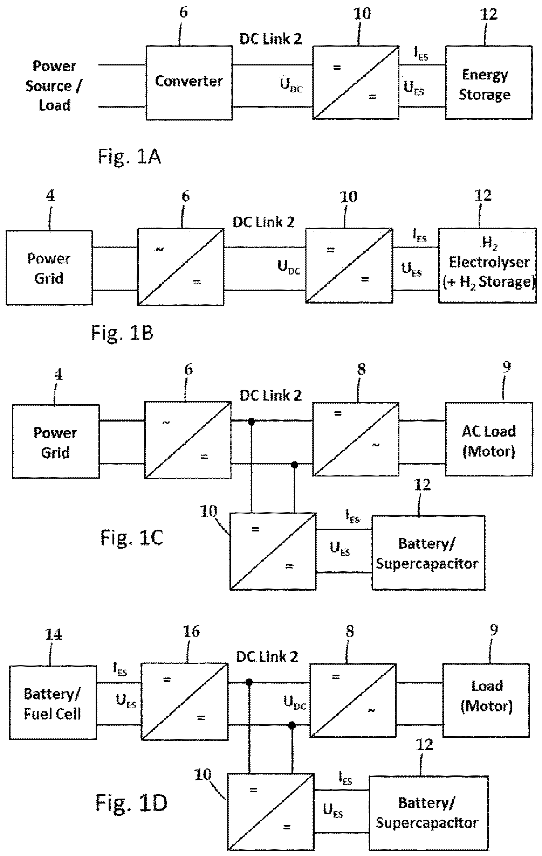

Figs. 1A-1D show exemplary electrical systems where a current ripple control according to embodiments of the invention 1 may be applied. Generally, a DC-DC converter 10 is coupled between a DC-link 2 and an energy storage 12.

Moreover, at least one further converter 6 is coupled to the DC-link, the other side of the further converter 6 being coupled to a power source or a load, as illustrated in Fig. 1A. There may be several further converters of same or different types connected to the common DC-link 2. The further converter 6 may be an AC-DC converter (e.g., a rectifier) or DC-AC converter (e.g., an inverter), for example if the further converter 6 is connected to an AC power source or an AC load. The further converter 6 may also be a DC-DC converter, for example if the further converter 6 is connected to a DC power source or load. The DC-DC converter 10 may a unidirectional converter (e.g., a step-down or step-up converter) or a bidirectional converter (e.g., buck boost converter). Herein, the DC voltage on the DC-link side is called a DC-link voltage $U_{DC}$ or an input voltage, the DC voltage on the energy storage side is called an energy storage voltage $U_{ES}$ or an output voltage, and the DC current on the energy storage side is called an energy storage current $I_{ES}$.

The terms "energy storage" and "electric energy storage" as used herein refer to any energy storage having a DC voltage and to which electric energy can be charged from a DC-link to be stored as an electrical energy or to be converted into another form (such as hydrogen) for storage and/or from which electric energy can be discharged to a DC-link by a DC-DC converter. Examples of energy storages include one or more rechargeable electric batteries or accumulators, super/ultra-capacitors, fuel cells, and hydrogen electrolysers or combinations thereof. All can be used for energy storage, but each is suited to different applications and load profiles. Electric batteries have high energy density and relatively low power density making them more suited to supplying lower levels of power over a longer period of time. Capacitors on the other hand are more suitable for high and rapidly cycling loads, for example applications like active load compensation or dynamic (regenerative) braking. Electric batteries are more suited to lower more stable loads, for example propulsion, traction and uninterruptible power supply (UPS). Supercapacitors (SCs) bridge the gap between batteries and conventional capacitors. They can store more energy than capacitors and supply it at higher power outputs than batteries. In hydrogen electrolysis, water is split into hydrogen and oxygen by applying an electrical voltage. In the electrolyser electricity is converted into hydrogen, which is then available as an energy carrier and for other hydrogen applications. Fuel cell is used to directly convert the chemical energy stored in hydrogen, ethanol, methanol, etc., into electricity. They may be used, for example, to as vehicle traction batteries, energy storages for renewable electricity (e.g. a wind power or a solar power), load levelling of an electric grid, etc.

Fig. 1B shows an exemplary electric system where the further converter 6 is an AC-DC converter (e.g., a rectifier, a controllable bridge rectifier) connected to a power supply network (grid) or another type of power source 4 and is capable to transfer electrical energy from the grid 4 to the DC-link 2 and/or vice versa. The unidirectional or bidirectional DC-DC converter 10 is connected between the DC-link 2 and the energy storage 12, such as a hydrogen ($H_2$) electrolyser unit which may be associated with a hydrogen tank, a fuel cell or similar $H_2$ storage means. The DC-DC converter 10 may step-down the DC-link voltage $U_{DC}$ to the energy storage voltage level $U_{ES}$, and the electrolyser unit converts the electricity into hydrogen which is stored. In the opposite direction, the stored hydrogen may be converted into electricity in a fuel cell or like, and the bidirectional DC-DC convert may step-up the converted electricity having the energy storage voltage level $U_{ES}$ to the DC-link voltage, and thereafter the electric energy is transferred back to the grid 4 by the AC-DC converter 6. For example, the energy storage 12 may store excess electrical capacity when it is available, for later release into a load or a power grid 4 when it is needed.

Fig. 1C shows another exemplary electric system where the further converter 6 is an AC-DC converter (e.g., a rectifier, a controllable bridge rectifier) is connected to a power supply network (grid) 4 or another type of AC power source and is capable of transferring energy from the grid 4 to the DC-link and/or vice versa. An DC-AC converter 8 (e.g., an inverter, a controllable bridge inverter) is connected between the DC-link 2 and an AC load 9 (e.g., an AC electric motor) and is capable of transferring energy from the DC-link 2 to the AC load 9 and/or vice versa. For example, the DC-AC converter 8 may be an electric motor drive which drives an electric motor 9 using the electricity transferred from the power grid 4. The DC-DC converter 10 is connected between the DC-link 2 and an energy storage 12, preferably one or more rechargeable batteries or supercapacitors. The DC-DC converter 10 may be able to charge the electrical storage 12 when demanded. Electrical energy may be stored, for example, when there is excessive energy available in the DC-link 2. For example, from the DC-link point of view, the motor 9 has two main operation modes: the motoring mode and the generating mode. In the motoring mode, the motor 9 rotates the machinery. The energy flows from the AC power grid 4 to the motor 9 through the AC-DC converter 6, the DC-link 2 and the DC-AC converter 8. In the generating mode, the machinery rotates the motor 9. This is the case for example when a hoist motor of a crane lowers a load (overhauling load) or a deaccelerates. To keep the rotation speed steady or slow down the rotation speed, the motor 9 brakes. During the braking, the motor 9 generates energy back to the DC-AC converter 8 which then conveys the energy further to the DC-link 2. This surplus energy may be stored into the energy storage 12. The DC -DC converter 10 may also be able to feed electric power from the energy storage 12 to the DC-link 2 when demanded, for example, if the power consumption of the devices connected to the DC-link is higher than the power feed from the AC-DC converter 6. In embodiments, it may be possible to use energy storage 12 as the main electrical power source if the grid 4 and the AC-DC converter 6 are not connected. In embodiments, the DC-DC converter 10 and the energy storage can be used as the main power source, and the electric energy from the AC-DC converter is used for charging the energy storage 12.

Fig. 1D shows still another exemplary electric system which may be similar to the electric system discussed with regard to Fig. 1C except that now the further converter 6 is a DC-DC converter that is connected to a DC power source 14, such as an electric battery, fuel cell, photovoltaic array, etc.

There are many different topologies of DC-DC converters, but what they have in common is that they require a choke inductance to slow down the rate of change of the current, and semiconductor switches, which can be used either to decrease the DC voltage (step-down), e.g., when power is transferred from the DC-link to the energy storage, or to increase the DC voltage (step-up), e.g., when power is transferred from the energy storage to the DC-link or from the energy storage to the DC-link. The exemplary embodiments are described herein with basic step-down or buck converters, step-up or boost converters, or buck-boost converters, but the embodiments of the inventions are not intended to be limited to any specific topology of DC-DC converters.

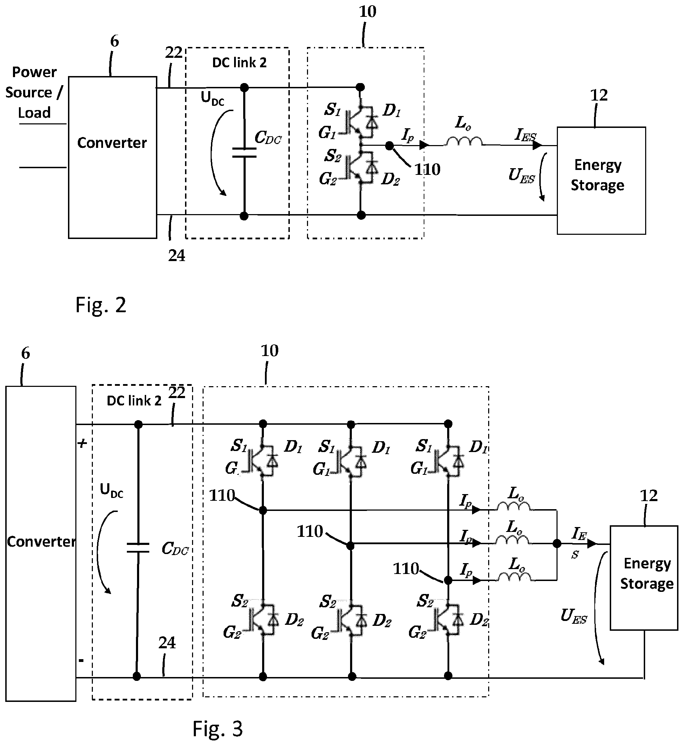

Fig. 2 shows an exemplary single-phase bidirectional DC-DC converter 10 connected between a DC-link 2 and an electrical energy storage 12. The DC-link 2 comprises a DC capacitor $C_{DC}$, a positive DC-link rail 22, a negative DC-link rail 24, and DC-link voltage $U_{DC}$ between the rails. The exemplary buck-boost converter 10 has a half-bridge topology including a pair of main or power switching devices $S_1$ and $S_2$ coupled in parallel to the DC-link rails 22 and 24 of the DC-link 2. The first main switching device $S_1$ may have a first terminal electrically coupled to the positive DC-link rail 22 and a second terminal electrically coupled to an output node 110. The second main switching device $S_2$ have first terminal coupled to output node 110 and a second terminal coupled to the negative DC-link rail 24. Across the first upper main switching device $S_1$ between the positive DC-link rail 22 and the output node 110 is connected a first antiparallel diode $D_1$, and across the second lower main switching device $S_2$ between the output node 110 and the negative DC-link rail 24 is connected a second antiparallel diode $D_2$. In a buck mode of operation, the lower switching device $S_2$ is constantly turned off and the upper main switching device $S_1$ is operable to turn on and turn off, and thereby to respectively connect and disconnect the DC-link rail 22 and the output node 110, in response to pulse width modulation (PWM) gate control signal(s) $G_1$ received from a control and driver circuitry. The electric energy is thereby transferred from the DC-link 2 and charged to the energy storage 12. In a boost mode of operation, the upper main switching device $S_1$ is constantly turned off and the lower main switching device $S_2$ is operable to turn on and turn off, and thereby to respectively connect and disconnect the DC-link rail 24 and the output node 110, in response to pulse width modulation (PWM) gate control signal(s) $G_2$ received from the control and driver circuitry. The electric energy is thereby discharged from the energy storage 12 and transferred to the DC-link 2. The output 110 of the DC-DC converter 10 may be coupled to the energy storage 12 through an inductor $L_o$ so that the DC energy storage current $I_{ES}$ is outputted to or inputted from the energy storage 12. The energy storage voltage $U_{ES}$ exists across the energy storage 12. The purpose of the inductance is to lower (filter) the ripple of the energy storage current $I_{ES}$. The filtering may also include a capacitance.

In embodiments, the switching devices $S_1$ and $S_2$ may be an insulatedgate bipolar transistor (IGBT), or another type of semiconductor switching device, such as an integrated gate-commutated thyristor (IGCT), a metal-oxide-semiconductor field-effect transistor (MOSFET), or a silicon carbide (SiC) MOSFET to name several examples.

Fig.3 illustrates an example of a multi-phase DC-DC converter 10, also called an interleaved converter. An interleaved converter 10 may comprise several (i.e., N) parallel DC-DC converter branches (e.g., from N=2 to N=6) sharing the common DC-link 2. The pulse width modulation (PWM) gate control signals $G_1/G_2$ are shifted from each other (i.e., 360 degrees/N). The interleaved topology decreases the energy storage current ripple when the several phase branches are connected together on the energy storage, thereby allowing reducing the size of the output inductor $L_o$. While a DC current does not have a phase, the current ripple does. With multiple evenly spaced ripple phases the current ripple can be decreased to 1/N, where N is the number of phases. The number of phases that is feasible to implement is limited, as more phases mean more complexity. The exemplary converter 10 illustrated in Fig. 3 is a bidirectional 3-phase (N=3) interleaved buck-boost converter comprising three-phase half-bridge having the control of the phases interleaved with 120 degrees phase shift. In an embodiment the three-phase half-bridge may comprise three parallel single-phase converters, such as the converter illustrated in Fig. 2, connected between the rails 22 and 24 of the common DC-link 2. The nodes 110 of the parallel converters are coupled through respective output inductances $L_o$ together on the energy storage 12. The output inductances $L_o$ may be implemented by separate inductors or magnetically coupled inductors, for example. The energy storage current $I_{ES}$ outputted to or inputted from the energy storage 12 is a sum of the individual phase currents $I_p$, and the energy storage voltage $U_{ES}$ exists across the energy storage 12.

The magnitude of the phase current ($I_p$) ripple $I_{p2p}$ is calculated when discharging the energy storage (boost mode) as follows:

$$I_{p2p} = (U_{ES} / L) * D * T_s \qquad (1)$$

where $D = 1 - (U_{ES} / U_{DC})$.

The equation (1) results in

$$I_{p2p} = (U_{ES} / L) * (1 - (U_{ES} / U_{DC})) * T_s \qquad (2)$$

where

      L = inductance of the output inductor $L_o$

      $T_s$ = Switching cycle = 1/fs, where $f_S$ is the switching frequency of the converter.

The magnitude of the phase current $(I_p)$ ripple $I_{p2p}$ is calculated when charging the energy storage (buck mode) as follows:

$$I_{p2p} = ((U_{DC} - U_{ES}) / L) * D * T_s \qquad (3)$$

where $D = (U_{ES} / U_{DC})$.

The equation (3) results in

$$I_{p2p} = ((U_{DC} - U_{ES}) / L) * (U_{ES} / U_{DC}) * T_s \qquad (4).$$

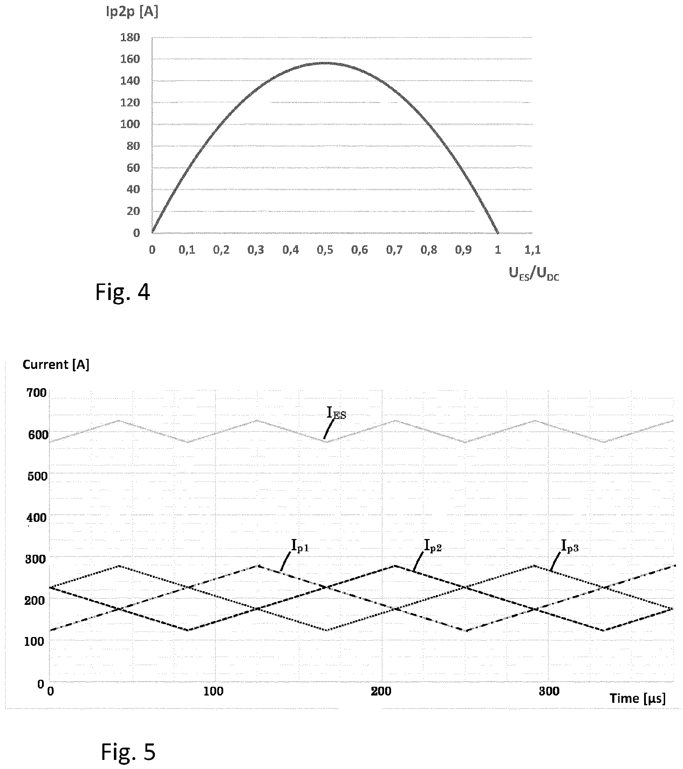

The ratio $U_{ES}/U_{DC}$ is called a pulse ratio or a duty cycle herein. The maximum value of the single-phase current ripple $I_{p2p}$ is reached both during charging and discharging with a duty cycle of 0.5. Fig. 4 illustrates an example of a current ripple $I_{p2p}$ versus a duty cycle for a single-phase DC-DC converter of Fig. 2 with a fixed $U_{DC}$ = 750 V, a varying $U_{ES}$ = 0...750 V, L = 300 uH, $f_s$ = 4 kHz, and $I_p$ = 200 A. The peak value of the current ripple $I_{p2p}$ is about 156 A.

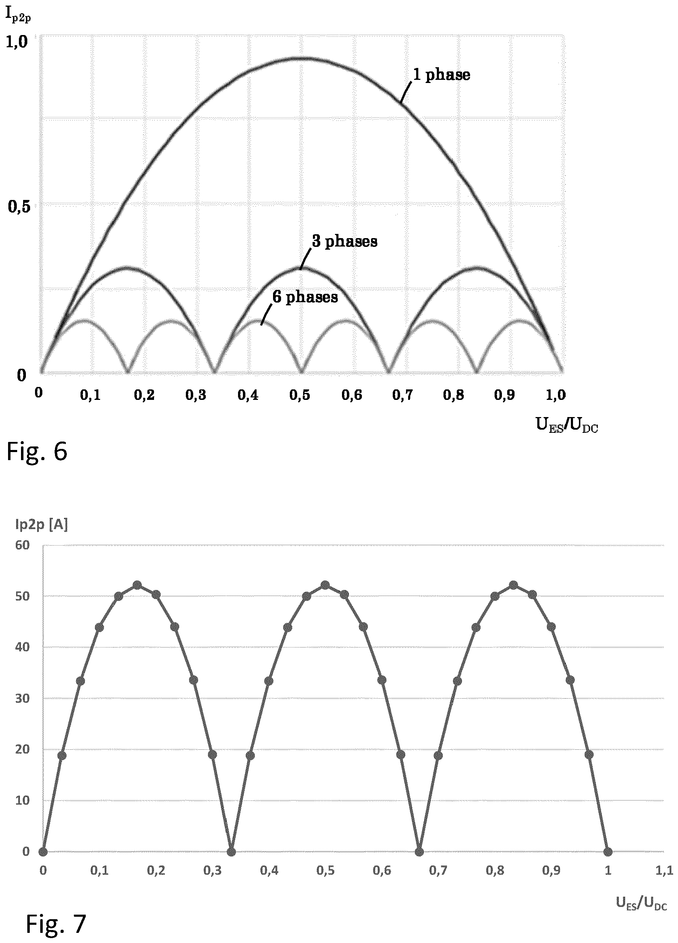

In a multi-phase interleaved DC-DC converter 10, the energy storage current $I_{ES}$ is the sum of the phase currents, as illustrated for the phase currents $I_{p1}$, $I_{p2}$, and $I_{p3}$ for a 3-phase interleaved DC-DC converter in Fig. 5. Thereby, also the pulsation of the energy storage current $I_{ES}$ is the sum of the pulsation of the phase currents, and the resulting peak-to-peak current ripple $I_{p2p}$ at the energy storage 12 will be reduced to at least about 1/N of the ripple of the single-phase configuration, when the number of phases is N, wherein N = positive integer. Ideally, the peak-to-peak current ripple $I_{p2p}$ will be reduced to zero, when the ripples of different phases are cancelling each other. The effect of interleaved phases to a phase current ripple $I_{p2p}$ of the DC-DC converter is also illustrated in Fig. 6 which shows a relative change in the peak-to-peak phase current ripple $I_{p2p}$ when increasing the number of phases N from a single phase to three phases, and further to six phases. Fig. 7 illustrates a peak-to-peak current ripple $I_{p2p}$ for a 3-phase interleaved DC-DC converter of Fig. 3 with the same parameter values as used for the single-phase DC-DC converter in Fig. 4. In the example of Fig. 7, the maximum ripple is decreased to 1/3 of the maximum ripple of the single-phase example shown in Fig. 4, i.e., to about 52 A from about 156 A. However, although the interleaving effectively reduces the current ripple, the number of phases that is feasible to implement is limited, e.g., to 6 phases, as more phases mean more complexity.

As noted above, the DC current ripple of the DC-DC converter has been conventionally reduced further with a stronger passive filtering, i.e., by increasing the inductance in an output filter of DC-DC converter or adding filter capacitance in the output filter. The downsides are that high power filters can become bulky and expensive, additionally it will introduce extra losses that decrease the efficiency of the overall power system. Moreover, the slow rate of rise of the current (i.e., a high inductance) may result in a slower system response in comparison to a system with a lower inductance or a higher current ripple, as it is not possible to rapidly increase or decrease the current due to the low inductance. On the one hand, the inductance requirement has been reduced by increasing the switching frequency of the converter. However, with the increasing switching frequency, the power switch switching losses are much higher and also the inductor core losses may increase depending on the core material and the frequency range, decreasing drastically the energy efficiency. Further, more expensive semiconductors with higher current rate are needed. The lower conduction losses will compensate the increased switching losses. Alternatively, it is possible to use semiconductor components with lower switching loss, such as silicon carbide semiconductors, but this usually results in poorer EMC performance, for example.

According to an aspect of the invention, the DC-link voltage $U_{DC}$ is dynamically adjusted to control a ratio $U_{ES}/U_{DC}$ to an optimal value that causes a desired current ripple of the energy storage. In embodiments the energy storage comprises one or more of a rechargeable energy storage, a hydrogen electrolyser, and a fuel cell. The energy storage voltage $U_{ES}$ is typically determined by the specific energy storage 12 used. Conventionally, also the DC-link voltage $U_{DC}$ have been substantially fixed, e.g., determined by the AC voltage of the power grid 4. When the DC-link voltage $U_{DC}$ is fixed, the operation point of the DC-DC converter 10 may not be optimal from the energy storage current ripple point of view. In embodiments, the duty cycle of $U_{ES}/U_{DC}$ of a DC-DC converter is changed and thereby the current ripple is affected by changing the DC-link voltage $U_{DC}$. In other words, with an adjustable DC-link voltage $U_{DC}$, it is possible use more optimal $U_{ES}/U_{DC}$ ratio for reducing or minimizing the current ripple of a DC-DC converter.

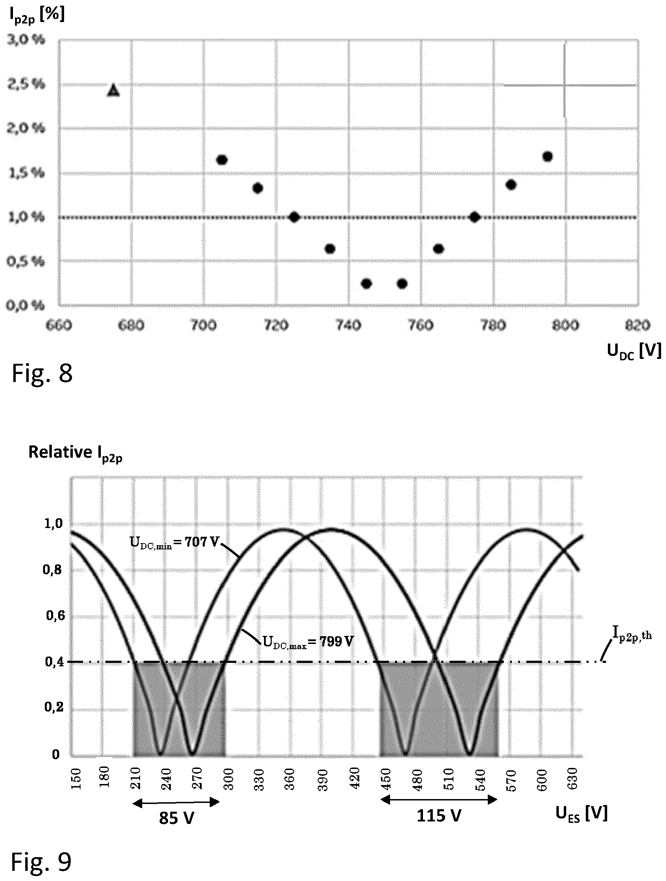

Fig. 8 shows an example of a behaviour of the peak-to-peak current ripple in function of the DC-link voltage $U_{DC}$, when the energy storage voltage $U_{ES}$ is fixed. The energy storage may be a hydrogen electrolyser 12, for example, such as that in the electric system configuration shown in Fig. 1B. In the example, $U_{ES}$ = 500 V, $I_{ES}$ = 250 A, and the DC-link voltage $U_{DC}$ is provide by an AC-DC converter (e.g., an active front end rectifier, or an IGBT supply unit) 6 coupled to a 500V AC voltage grid. The DC-link voltage $U_{DC}$ may be adjustable in a range from 707 to 799 V. It is apparent from Fig. 8 that the current ripple can be significantly reduced by adjusting the DC-link voltage $U_{DC}$ to an optimal value or value range, e.g., to about 750 V.

In embodiments, the DC-DC converter is an interleaved multi-phase DC-DC converter, and the level of the DC-link voltage is dynamically adjusted to control the ratio $U_{ES}/U_{DC}$ to a value or value range that corresponds to one of minimum current ripple values. In an interleaved N-phase DC-DC converter the ripple of the energy storage current $I_{ES}$ has N peak values and N +1 zero points (zero values) at intervals 1/N of the duty cycles $U_{ES}/U_{DC}$. As shown in the examples illustrated in Fig. 6, there are four (N +1) zero points (zero values) at duty cycles 0, 1/3, 2/3 and 1 for a 3-phase interleaved DC-DC converter, and seven (N +1) zero points (zero values) at duty cycles 0, 1/6, 1/3, ½, 2/3, 5/6, and 1 for a 6-phase interleaved DC-DC converter. Therefore, the current ripple is minimized to zero, when the DC-link voltage $U_{DC}$ is adjusted so that the duty cycle $U_{ES}/U_{DC}$ is at one of the zero points. In embodiments, it may be desirable to adjust the DC-link voltage $U_{DC}$ to as high level as possible to enable transferring as much power as possible. In embodiments, the DC-link voltage $U_{DC}$ may not be adjusted down to a value corresponding to the duty cycle 1 but close to it, because no power is transferred with the duty cycle 1. Duty cycle 0 means the energy storage voltage $U_{ES}$ is 0 V.

Exemplary embodiments according to the invention are presented herein for single-phase, 3-phase and 6-phase DC-DC converters. However, the invention can be applied similarly to any number N of phases, such as 2-phase or 4-phase DC-DC converters. The advantages of the current ripple control according to the invention become more and more significant as the number of phases increases. However, considerable reduction of the current ripple will be achieved already in single-phase DC-DC converters when compared with the prior art approaches. It shall be appreciated that the ripple current control according to the invention is not to be limited to any specific DC-DC converter topology presented as examples herein, but it can be applied in all converter topologies, where the magnitude of the current ripple produced by the DC-DC converter is dependent on the ratio of the energy storage voltage $U_{ES}$ and the DC-link voltage $U_{DC}$.

It shall be appreciated that the ripple current control according to the invention is not to be limited to any specific control embodiments presented as examples herein, but it can be embodied in various alternative ways apparent for a skilled person in the art upon reading this description within the scope of the attached claims.

An exemplary embodiment of a current ripple control of a 3-phase interleaved DC-DC converter is described with reference to Fig. 9. The topology of the DC-DC controller 10 may be as shown in Fig. 3. The energy storage may be a hydrogen electrolyser 12, for example, such as that in the electric system configuration shown in Fig. 1B. The energy storage voltage $U_{ES}$ (e.g., an electrolyser voltage) may vary in a range from 150 V to 720 V, for example. In the example, the DC-link voltage $U_{DC}$ may be provided by an AC-DC converter (e.g., a rectifier) 6 coupled to a 500V AC voltage grid. The DC-link voltage $U_{DC}$ may be adjustable in a range from the minimum value $U_{DC,min}$ = 707 V to $U_{DC,max}$ = 799 V. Fig. 9 illustrates the peak-to-peak current ripple $I_{p2p}$ in function of the energy storage voltage $U_{ES}$ for the $U_{DC,min}$ and $U_{DC,max}$. The peak-to-peak current ripple $I_{p2p}$ becomes zero at the duty cycles 1/3 and 2/3. Let us assume that the desired current ripple is 40 percent or less of the maximum (peak) ripple value. The desired current ripple is represent by the threshold $I_{p2p,th}$ in Fig. 9. With a fixed DC-link voltage $U_{DC}$ (e.g., 707 V), the desired current ripple would be achieved within about 50 V range of the energy storage voltage $U_{ES}$ (210 V...260 V) at and closely below and above the zero point duty cycle 1/3, and within about 50 V range of the energy storage voltage $U_{ES}$ (450 V...500 V) at and closely below and above the zero point duty cycle 2/3. The zero current ripple can be achieved only at one value of the energy storage voltage $U_{ES}$ (about 230 V) at the zero-point duty cycle 1/3, and only at one value of the energy storage voltage $U_{ES}$ (about 465 V) at the zero-point duty cycle 2/3. On the other hand, with adjusting of the DC-link voltage $U_{DC}$ in the range from 707 V to 799 V dependent the energy storage voltage $U_{ES}$ and thereby adjusting the duty cycle, the range of the energy storage voltage $U_{ES}$ for which the desired current ripple can be achieved will be extended to about 80 V (210 V...290 V) at and close to the duty cycle 1/3, and to about 115 V (450 V...565 V) at and close to the duty cycle 2/3. Within these ranges, the zero current ripple can be achieved for about 35 V range of the energy storage voltage $U_{ES}$ (about 230 V... 265 V) at the zero point duty cycle 1/3, and for about 65 V range of the energy storage voltage $U_{ES}$ (about 465 V... 540 V) at the zero point duty cycle 2/3. The DC-link voltage $U_{DC}$ giving the optimal value of the duty cycle $U_{ES}/U_{DC}$ and the minimum current ripple for an energy storage voltage $U_{ES}$ is called an optimized value of the DC-link voltage $U_{DC, opt}$ herein.

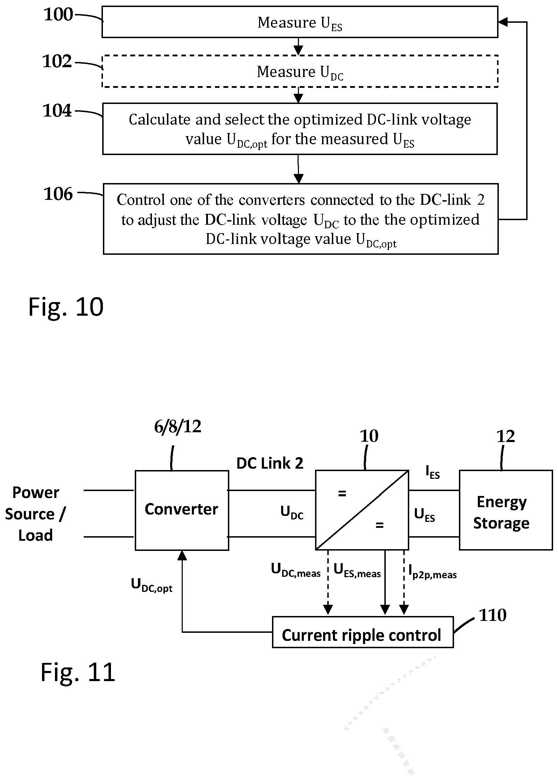

Referring to Figs. 10 and 11, an exemplary current ripple control procedure may be carried as follows. The present value of the energy storage voltage $U_{ES}$ is measured or otherwise determined (step 100 in Fig. 11). Optionally also the present value of the DC-link voltage $U_{DC}$ and/or the present current ripple $I_{p2p}$ is measured or otherwise determined (step 102). In embodiments, the DC-DC converter 10 may be configured to carry out the measurements and to provide the measured values $U_{ES.meas}$, and optionally $U_{p2p.meas}$ and/or $U_{DC.meas}$. The optimized value of the DC-link voltage $U_{DC, opt}$ is calculated or otherwise determined and selected for the present value of the energy storage voltage $U_{ES}$ (step 104). In embodiments, the calculations and selections may be performed in a current ripple control unit 110. The control unit 110 may be implemented in a dedicated controller apparatus, or it may be part of a controller in one of the converters 6, 8, 10, or 16, or in any higher-level other controller (such as a motor control) in a particular electric system, or the control unit 110 may be distributed among one or more controllers. The DC-link voltage $U_{DC}$ is adjusted to the optimized value $U_{DC, opt}$ (step 116). The process is preferably repeated for each new measured value of the energy storage voltage $U_{ES}$. Generally, the DC-link voltage $U_{DC}$ may be provided by any adjustable voltage source connected to the DC-link 2. In embodiments, one of the converters 6, 8, 10 and 16 connected to the DC-link 2 may be controllable to adjust the DC-link voltage $U_{DC}$ to the to the optimized value $U_{DC, opt}$. Often the measurement of the present DC-link voltage $U_{DC.meas}$, may already be available in an adjustable voltage source or converter. The current ripple control 110 may be configured to provide the optimized voltage value $U_{DC, opt}$ to an adjustable voltage source or converter as a reference or required voltage value to which the DC-link voltage shall be adjusted. In embodiments, an AC-DC converter 6 connected to the power grid 4 is controlled to adjust the DC-link voltage $U_{DC}$. Examples of suitable AC-DC converters include IGBT supply units (ISUs) ACS800 and ACS880 manufactured by ABB Inc. Should there be need to swap the DC-link voltage band, it may be necessary to actively do it in the supply unit, e.g., by discharging the DC-link 2 to the grid 4 for a short period, to achieve fast voltage change.

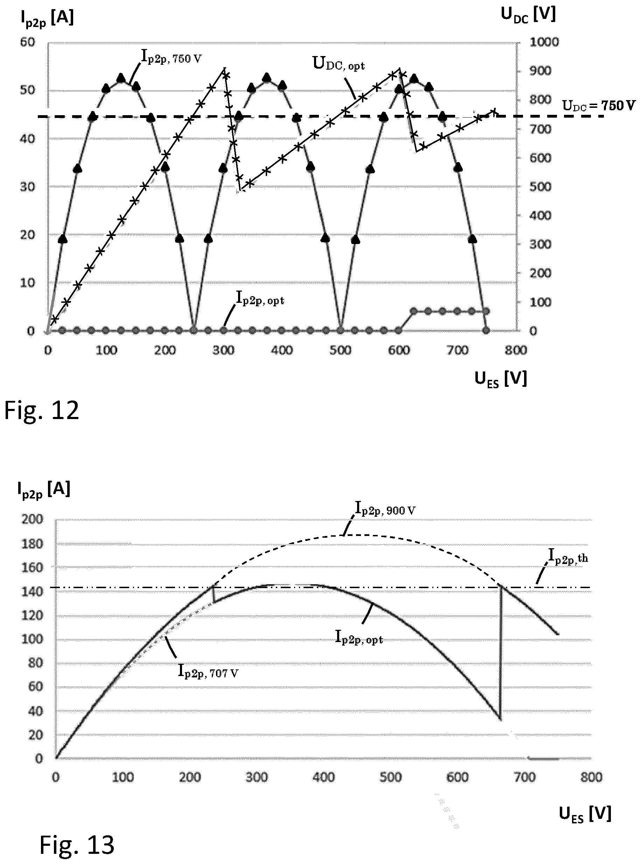

Another exemplary embodiment of a current ripple control of a 3-phase interleaved DC-DC converter is described with reference to Fig. 12. In this example embodiment the current ripple can be controlled to zero or close to zero for the full range of the energy storage voltage $U_{ES}$ values. The topology of the DC-DC controller 10 may be as shown in Fig. 3. The energy storage may be a battery or supercapacitor 12, for example, such as that in the electric system configurations shown in Fig. 1C or 1D. The energy storage voltage $U_{ES}$ (e.g., a battery or supercapacitor voltage) may vary in a range from 0 V to 800 V, for example. In the example, the DC-link voltage $U_{DC}$ may be provided by an AC-DC converter (e.g., rectifier an active front end rectifier or an IGBT supply unit) 6 coupled to an AC voltage grid and able to adjust the DC-link voltage. It shall be appreciated that the AC voltage level $U_{AC}$ is not relevant to the invention but may vary freely according to each specific application. A minimum value of the DC-link voltage $U_{DC}$ provided by the AC-DC converter is

$$U_{DC,min} = \sqrt{2} \times U_{AC}$$

. For example, for a grid voltage 230 VAC the minimum DC-link voltage $U_{DC,min}$ would be about 324 V, while for a a grid voltage 500 VAC the minimum DC-link voltage $U_{DC,min}$ would be about 707 V. The AC-DC converter may boost desired DC-link voltage values $U_{DC}$ higher than the minimum value. For example, with the grid voltage 230 V, the DC-link voltage $U_{DC}$ could be boosted to any voltage higher than $U_{DC,min}$= 324 V. Therefore, the DC-link voltage $U_{DC}$ may be adjustable in a range from a minimum value $U_{DC,min}$ to a maximum value $U_{DC,max}$. Fig. 12 illustrates the peak-to-peak current ripple $I_{p2p}$ in function of the energy storage voltage $U_{ES}$. The line $I_{p2p,750V}$ shows the current ripple with a fixed DC-link voltage $U_{DC}$ = 750 V, i.e., without the dynamic ripple control. The dashed line shows the fixed DC-link voltage $U_{DC}$ = 750 V. The line $I_{p2p, opt}$ shows the current ripple with a dynamically controlled optimized DC-link voltage $U_{DC}$, i.e., with the dynamic ripple control. The line $U_{DC, opt}$ shows the optimized DC-link voltage $U_{DC, opt}$, which is dynamically adjusted so the duty cycle $U_{ES}/U_{DC}$ is optimal at each value of the energy storage voltage $U_{ES}$. Other parameters in the example may be L = 300 uH, $f_s$ = 4 kHz, and $I_p$ = 200 A. Fig. 12 illustrates a generic example where the adjustment range of the optimized DC-link voltage $U_{DC, opt}$ is shown to start from O V. In practice, the adjustment range of the optimized DC-link voltage $U_{DC, opt}$ may start from the minimum DC-link voltage $U_{DC,min}$ available in the specific application, e.g., from 324 V or 707 V.

In embodiments, the current ripple control may be implemented by a procedure and a control arrangement described with reference to Figs. 10 and 11, for example.

In an exemplary embodiment, the calculation and selection of the optimized value of the DC-link voltage $U_{DC, opt}$ in the example of Figure 12 may be as follows. Preferably, the optimized value of the DC-link voltage $U_{DC, opt}$.

An optimized value of the DC-link voltage for the duty cycle 1/3 may be calculated as

$$U_{DC,(1/3)} = U_{ES} / (1-(1/3)) \qquad (5).$$

An optimized value of the DC-link voltage for the duty cycle 2/3 may be calculated as

$$U_{DC,(2/3)} = U_{ES} / (1-(2/3)) \qquad (6).$$

An optimized value of the DC-link voltage for the duty cycle close below 1 may be calculated as

$$U_{DC,(<1)} = U_{ES} + 5 \text{ V} \qquad (7).$$

Duty cycle 1 is not used as no power is transferred with that duty cycle. Now among these three calculated optimized values of the DC-link voltage, one may be selected to be the optimized value of the DC-link voltage $U_{DC, opt}$ as follows

$$U_{DC,opt} = IF(MIN(U_{DC,(1/3)}, U_{DC,(2/3)}) > 900, U_{DC, (<1)}, IF(U_{DC,(2/3)} > 900), U_{DC,(1/3)}, U_{DC,(2/3)})) \qquad (8).$$

In other words, if the optimized DC-link voltage values $U_{DC,(1/3)}$ and $U_{DC,(2/3)}$ are both greater than 900 V, then $U_{DC,(<1)}$ is selected as the optimized value of the DC-link voltage $U_{DC, opt}$, i.e., $U_{DC, opt} = U_{DC,(<1)}$. This applies to the values of the energy storage voltage $U_{ES}$ higher than 600 V in Fig. 12. If $U_{DC,(2/3)}$ is greater than 900 V but $U_{DC,(1/3)}$ is not, then $U_{DC,(1/3)}$ is selected as the optimized value of the DC-link voltage $U_{DC, opt}$, i.e., $U_{DC, opt} = U_{DC,(1/3)}$. This applies to the values of the energy storage voltage $U_{ES}$ equal to and smaller than 300 V in Fig. 12. Finally, if none of the optimized DC-link voltage values $U_{DC,(1/3)}$ and $U_{DC,(2/3)}$ is greater than 900 V, then $U_{DC,(2/3)}$ is selected as the optimized value of the DC-link voltage $U_{DC, opt}$, i.e., $U_{DC, opt} = U_{DC,(2/3)}$). This applies to the values of the energy storage voltage $U_{ES}$ higher than 300 V and up to 600 V in Fig. 12. This selection also assures that a highest possible DC-link voltage $U_{DC}$ is always used to enable transferring as much power as possible.

A further exemplary embodiment of a current ripple control of a single-phase DC-DC converter is described with reference to Fig. 13. The topology of the DC-DC controller 10 may be as shown in Fig. 2. The energy storage may be a battery or supercapacitor 12, for example, such as that in the electric system configurations shown in Fig. 1C or 1D. The energy storage voltage $U_{ES}$ (e.g., a battery or supercapacitor voltage) may vary in a range from 0 V to 750 V, for example. In the example, the DC-link voltage $U_{DC}$ may be provided by an AC-DC converter (e.g., a rectifier) 6 coupled to a 500V AC voltage grid. The DC-link voltage $U_{DC}$ may be adjustable in a range from a minimum value $U_{DC,min}$ = 707 V to a maximum value $U_{DC,max}$ = 900 V. Fig. 13 illustrates the peak-to-peak current ripple $I_{p2p}$ in function of the energy storage voltage $U_{ES}$. The dashed line $I_{p2p,900V}$ shows the current ripple with a fixed DC-link voltage $U_{DC}$ = 900 V, i.e., without the dynamic ripple control. The dotted line $I_{p2p,707V}$ shows the current ripple with a fixed DC-link voltage $U_{DC}$ = 707 V, i.e., without the dynamic ripple control. The horizontal dashed line $I_{p2p,th}$ shows the control threshold or limit 145 A set to the maximum allowed peak-to-peak current ripple $I_{p2p}$. The solid line $I_{p2p, opt}$ shows a current ripple with a dynamically controlled optimized DC-link voltage $U_{DC}$, i.e., with the dynamic ripple control. Other parameters in the example may be L = 300 uH, $f_s$ = 4 kHz. The current ripple control primarily selects the optimized DC-link voltage $U_{DC}$ to be 900 V for the energy storage voltage values $U_{ES}$ with which the resulting peak-to-peak current ripple $I_{p2p,900V}$ is below the limit 145 A. This applies for the energy storage voltage values $U_{ES}$ from O V to about 230 V and about from 680 V to 750 V, where the current ripple follows the dashed line $I_{p2p,900V}$ in Fig. 13. For the energy storage voltage values $U_{ES}$ with which the resulting peak-to-peak current ripple $I_{p2p,900V}$ would exceed the limit 145 A, the current ripple control changes the optimized DC-link voltage $U_{DC}$ to be 707 V, so that the current ripple follows the dashed line $I_{p2p,707V}$ in Fig. 13. This applies for the energy storage voltage values $U_{ES}$ from about 23O V to about 680 V. As a result, the Thereby, the current ripple $I_{p2p}$ will be kept below the limit 145 A at all the energy storage voltage values $U_{ES}$.

In embodiments, one or more phases of a multi-phase interleaved DC-DC converter may be selectively switched off to obtain a zero point of the current ripple at a desired point of the energy storage voltage range $U_{ES}$, preferably so that a phase shift between the remaining phases is 180 degrees or 90 degrees and there is a zero point of the current ripple at 50 percent point of the energy storage voltage $U_{ES}$. Thereby, a control of the current ripple can be achieved also within a range of the energy storage voltages $U_{ES}$ at and close to the desired point, such as the 50 percent point. For example, a 3-phase interleaved DC-DC converter does not have a zero point of the current ripple at the midpoint of the energy storage voltage $U_{ES}$, as illustrated in Fig. 9. Therefore, a control of the current ripple cannot be achieved close to this midpoint. On the other hand, when one phase of a 3-phase interleaved DC-DC converter is selectively switched off, we will effectively have a 2-phase interleaved DC-DC converter having a 180-degree phase shift between the phases and a a zero point of the current ripple at the midpoint of the energy storage voltage $U_{ES}$. Therefore, also a control of the current ripple can be achieved at and close to the midpoint voltage. Naturally, the switching off of the phase or phases shall be carried out only if the load current is sufficiently low, so that the remaining phases are not overloaded.

The current ripple control techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

The description and the related drawings are only intended to illustrate the principles of the present invention by means of examples. Various alternative embodiments, variations and changes are obvious to a person skilled in the art on the basis of this description. The present invention is not intended to be limited to the examples described herein but the invention may vary within the scope and spirit of the appended claims.

**Claims**

1. A method of controlling a current ripple caused by a DC-DC converter coupled between a DC-link and an energy storage, the DC-link having a DC-link voltage $U_{DC}$ and the energy storage having a DC energy storage voltage $U_{ES}$, the method comprising dynamically adjusting the DC-link voltage $U_{DC}$ to control a ratio $U_{ES}/U_{DC}$ to an optimal value or value range that causes a desired current ripple level at the energy storage.

2. The method as claimed in claim 1, wherein the dynamically adjusting comprises

   determining a voltage or voltage range of the energy storage voltage $U_{ES}$,
   determining the optimal value or value range of the DC-link voltage $U_{DC}$ that gives the optimal value or value range of the ratio $U_{ES}/U_{DC}$ for the determined voltage or voltage range of the energy storage voltage $U_{ES}$, and
   adjusting the DC-link voltage $U_{DC}$ to the optimal value or value range to obtain the desired current ripple level for the determined voltage or voltage range of the energy storage voltage $U_{ES}$.

3. The method as claimed in claim 1 or 2, wherein the desired current ripple is equal to or less than a predetermined target ripple or within a predetermined current ripple range, preferably a zero or close to zero.

4. The method as claimed in any one of the preceding claims, wherein the determining comprises selecting the highest possible optimal value or value range of the DC-link voltage $U_{DC}$, if there is a plurality of possible optimal values or value ranges of the DC-link voltage $U_{DC}$, to enable transferring as much electric power as possible.

5. The method as claimed in any one of the preceding claims, comprising discharging the DC-link before changing from one optimal value or value range of the DC-link voltage $U_{DC}$ to another.

6. The method as claimed in any one of the preceding claims, wherein the DC-DC converter is an interleaved multi-phase DC-DC converter, and wherein the method comprises dynamically adjusting the DC-link voltage $U_{DC}$ to control the ratio $U_{ES}/U_{DC}$ to a value or value range that corresponds to one of zero points of current ripple.

7. The method as claimed in any one of the preceding claims, wherein the DC-DC converter is an interleaved three-phase DC-DC converter, and wherein the method comprises adjusting the DC-link voltage to control the ratio $U_{ES}/U_{DC}$ to a value or value range that is about or close to one of 1/3, 2/3, and 1.

8. The method as claimed in any one of the preceding claims, wherein the DC-DC converter is an interleaved six-phase DC-DC converter, and wherein the method comprises adjusting the DC-link voltage to control the ratio $U_{ES}/U_{DC}$ to a value or value range that is about or close to one of 1/6, 1/3, 1/2, 2/3, 5/6, 1.

9. The method as claimed in any one of the preceding claims, wherein the DC-DC converter is an interleaved multi-phase DC-DC converter, preferably and wherein the method comprises selectively switching off one or more phases of a multi-phase interleaved DC-DC converter to obtain a zero point of the current ripple at a desired point of the energy storage voltage range, preferably so that a phase shift between the remaining phases is 180 degrees or 90 degrees and there is a zero point of the current ripple at a midpoint of the energy storage voltage range.

10. The method as claimed in any one of claims 1-5, wherein the DC-DC converter is a single-phase DC-DC converter, and the method comprises

    setting a limit value for the current ripple level of the energy storage,
    determining a present current ripple level,
    adjusting the DC-link voltage $U_{DC}$ primarily to a first predetermined value, and
    adjusting the level of the DC-link voltage $U_{DC}$ from a first predetermined value to a second predetermined value, if the present current ripple level was to exceed the limit value, wherein the second predetermined value is smaller than the first predetermined value, the second predetermined value controlling the ratio $U_{ES}/U_{DC}$ to a value or value range that limits the present current ripple level to the set limit value or less.

11. The method as claimed in any one of the preceding claims, wherein the energy storage comprises one or more of a rechargeable energy storage, a hydrogen electrolyser, and a fuel cell.

12. The method as claimed in any one of the preceding claims, wherein the DC-DC converter is bidirectional.

13. An electric system, comprising

a DC-link, the DC-link having a DC-link voltage $U_{DC}$,
an energy storage, the energy storage having a DC energy storage voltage $U_{ES}$,
a DC-DC converter coupled between the DC-link and the energy storage,
adjustment means for adjusting the DC-link voltage $U_{DC}$, and
control means configured to control the electric system to carry out the method according to any one of claims 1-12.

14. The electric system as claimed in claim 13, comprising at least one further converter coupled to the DC-link coupled to a power source or a load, wherein the at least one further converter comprises one or more of an AC-DC converter connected to an AC power source or an AC load, a DC-AC converter connected to an AC power source or an AC load, and a further DC-DC converter connected to a DC power source or a DC load, wherein the AC power source preferably comprises one or more of an AC power grid and a wind power plant, wherein the DC power source preferably comprises one or more of a battery, a fuel cell, and a solar power plant, wherein the load preferably comprises an AC motor or a DC motor.

15. The electric system as claimed in claim 13 or 14, wherein the adjustment means comprise an adjustable voltage source, preferably the DC-DC converter or the at least one further converter.

16. The electric system as claimed in claim 13, 14 or 15, wherein the control means comprise a separate controller unit, a controller of the DC-DC converter or the at least one further converter, or a higher-level controller in the electric system, as any combination thereof.

Fig. 1A

Fig. 1B

Fig. 1C

Fig. 1D

Fig. 2

Fig. 3

Ip2p [A]

Fig. 4

Current [A]

Fig. 5

Fig. 6

Fig. 7

Fig. 8

Fig. 9

**100** — Measure $U_{ES}$

**102** — Measure $U_{DC}$

**104** — Calculate and select the optimized DC-link voltage value $U_{DC,opt}$ for the measured $U_{ES}$

**106** — Control one of the converters connected to the DC-link 2 to adjust the DC-link voltage $U_{DC}$ to the the optimized DC-link voltage value $U_{DC,opt}$

## Fig. 10

**6/8/12**

**10**

**12**

Power Source / Load

Converter

DC Link 2

$U_{DC}$

$=$ / $=$

$I_{ES}$

$U_{ES}$

Energy Storage

$U_{DC,opt}$

$U_{DC,meas}$ | $U_{ES,meas}$ | $I_{p2p,meas}$

Current ripple control

**110**

## Fig. 11

Fig. 12

Fig. 13

Europäisches
Patentamt

European
Patent Office

Office européen
des brevets

# EUROPEAN SEARCH REPORT

**Application Number**

EP 23 20 7702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 224 805 B1 (YOUNG CHRIS M [US]) 5 March 2019 (2019-03-05) * column 3; figures 3, 4 * | 1-16 | INV. H02M1/00 H02M1/14 H02M3/158 |
| X | JP 2020 202711 A (SUMITOMO ELECTRIC INDUSTRIES) 17 December 2020 (2020-12-17) * paragraphs [0007] – [0010], [0016] – [0020]; figures 2, 5, 7, 11, 13 * | 1-16 | |
| A | ZUPAN IVAN ET AL: "Power converter circuits for recuperation of the regenerative braking energy in rail vehicles", 2019 42ND INTERNATIONAL CONVENTION ON INFORMATION AND COMMUNICATION TECHNOLOGY, ELECTRONICS AND MICROELECTRONICS (MIPRO), CROATIAN SOCIETY MIPRO, 20 May 2019 (2019-05-20), pages 174-179, XP033574914, DOI: 10.23919/MIPRO.2019.8757124 [retrieved on 2019-07-08] * text on page 175, end of section II: "Energy storage elements used in regenerative braking systems are most commonly lithium-ion batteries and/or supercapacitors. These storage elements require a constant charge or discharge current with minimal ripple. Therefore, converters in these systems must have the lowest possible current ripple on the energy storage element side."; page 175 * | 1-16 | **TECHNICAL FIELDS SEARCHED (IPC)** H02M |

The present search report has been drawn up for all claims

| Place of search | Date of completion of the search | Examiner |
|---|---|---|
| The Hague | 28 March 2024 | Zeljkovic, Sandra |

EPO FORM 1503 03.82 (P04C01)

## ANNEX TO THE EUROPEAN SEARCH REPORT
## ON EUROPEAN PATENT APPLICATION NO.

EP 23 20 7702

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2024

| Patent document cited in search report | | | Publication date | Patent family member(s) | | | Publication date |
|---|---|---|---|---|---|---|---|
| US 10224805 | | B1 | 05-03-2019 | CN | 110277913 | A | 24-09-2019 |
| | | | | CN | 110690811 | A | 14-01-2020 |
| | | | | CN | 110729890 | A | 24-01-2020 |
| | | | | CN | 110752746 | A | 04-02-2020 |
| | | | | EP | 3540926 | A1 | 18-09-2019 |
| | | | | JP | 2019162025 | A | 19-09-2019 |
| | | | | KR | 20190108475 | A | 24-09-2019 |
| | | | | TW | 201943196 | A | 01-11-2019 |
| | | | | TW | 202007045 | A | 01-02-2020 |
| | | | | TW | 202007060 | A | 01-02-2020 |
| | | | | TW | 202008697 | A | 16-02-2020 |
| | | | | US | 10224805 | B1 | 05-03-2019 |
| | | | | US | 10243449 | B1 | 26-03-2019 |
| | | | | US | 10243465 | B1 | 26-03-2019 |
| | | | | US | 2019288591 | A1 | 19-09-2019 |
| JP 2020202711 | | A | 17-12-2020 | NONE | | | |

EPO FORM P0459